Europäisches Patentamt

European Patent Office

Office européen des brevets

(19)

(11) Veröffentlichungsnummer: **0 017 200**
A1

(12) # EUROPÄISCHE PATENTANMELDUNG

(21) Anmeldenummer: 80101691.6

(22) Anmeldetag: 28.03.80

(51) Int. Cl.³: **G 01 L 19/00**
G 01 L 9/10, G 01 L 9/12
G 01 L 23/24

(30) Priorität: 02.04.79 DE 2913161

(43) Veröffentlichungstag der Anmeldung:
15.10.80 Patentblatt 80/21

(84) Benannte Vertragsstaaten:
DE FR GB

(71) Anmelder: SIEMENS AKTIENGESELLSCHAFT Berlin
und München
Postfach 22 02 61
D-8000 München 22(DE)

(72) Erfinder: Dittricht, Josef, Dipl.-Ing.
Hirschweg 9
D-7500 Karlsruhe 41(DE)

(54) Geteilte Druckabgriff-Manschette.

(57) Geteilte Druckabgriff-Manschette, die ein sich unter dem Druck eines Fluids elastisch aufweitendes Rohr 1 umfaßt, wobei die geteilte Manschette 2, 4 mindestens einen fluid-druckabhängig breitenveränderlichen Spalt zur Aufnahme je eines in ein elastisches 8 Dielektrikum bzw. einen elastischen Isolator eingebetteten kapazitiven bzw. induktiven Sensors 6 sowie einer mindestens auf einer Seite ebenen Paßscheibe 5 zum Ausgleich verschiedener Rohrdurchmesser enthält.

FIG 1

EP 0 017 200 A1

Croydon Printing Company Ltd.

SIEMENS AKTIENGESELLSCHAFT     Unser Zeichen
Berlin und München            VPA 79 P 3 5 1 3 BRR

### Geteilte Druckabgriff-Manschette

Die Erfindung bezieht sich auf eine geteilte Druckabgriff-Manschette, die ein sich unter dem Druck eines Fluids elastisch aufweitendes Rohr umfaßt und einen druckabhängig breitenveränderlichen, einen Sensor aufnehmenden Spalt enthält.

Eine derartige Manschette ist der DE-OS 27 47 949, insbesondere der zweiten und dritten Seite, letzter bzw. erster Absatz, zu entnehmen. Danach besteht die bekannte Manschette aus zwei Halbschalen, der Spalt ist kreisringförmig und entsteht zwischen dem inneren Durchmesser der Halbschalen und dem äußeren Durchmesser des Leitungsrohrs, das sich unter dem Druck eines Fluids aufweitet. Der Spalt ist mit einer Isolierschicht bzw. einem Dielektrikum ausgefüllt, das seine Dicke elastisch ändern kann. Wenn der Innendurchmesser der Halbschalen bzw. der Innendurchmesser der Dielektrikumschicht dem Außendurchmesser des Leitungsrohrs nicht exakt angepaßt ist, so entstehen bei der Messung undefinierte Nullbedingungen. Bei größeren Abweichungen der Durchmesser

0017200

wird die elastische Dielektrikumschicht sogar nur an linienhaften Berührungsstellen auf dem Leitungsrohr aufliegen. Die Meßbedingungen werden in diesem Fall noch unübersichtlicher.

Der Erfindung lag die Aufgabe zugrunde, eine geteilte Druckabgriff-Manschette zu schaffen, die leicht an verschiedene Rohrdurchmesser angepaßt werden kann und bei der vor allem der Meßeffekt unabhängig ist von der geometrischen Gestalt der Berührungsflächen zwischen Manschette und Rohr.
Bei einer eingangs beschriebenen Manschette wird diese Aufgabe gemäß der Erfindung dadurch gelöst, daß zum Ausgleich verschiedener Rohrdurchmesser in den Spalt zusätzlich eine mindestens auf einer Seite ebene Paßscheibe eingelegt ist.
Damit können für ein und dieselbe Manschette erheblich größere Durchmessertoleranzen von Leitungsrohren zugelassen werden, weil einerseits die Geometrie der Auflagefläche der Paßscheibe auf die Rohrwandung nicht unmittelbar den Sensor beeinflußt und andererseits eine sich mit verschiedenem Rohrdurchmesser verändernde Spaltbreite leicht durch verschiedene Paßscheiben ausgeglichen werden kann.

Bei einem Ausführungsbeispiel der Erfindung liegt der Spalt in einer Teilungsfuge der Manschette. Dabei hat die Paßscheibe zwei ebene, parallele Oberflächen.

Ein zweites Ausführungsbeispiel der Erfindung sieht eine Manschette vor, bei der der Spalt zwischen dem Rohr und einem der Manschettenteile vorgesehen ist und bei der die Paßscheibe eine dem Rohr angepaßte, gekehlte und eine ebene Oberfläche aufweist.
Es können auch zwischen dem Rohr und den Manschettenteilen jeweils ein Spalt mit einem Sensor und einer am Rohr anliegenden Paßscheibe angeordnet sein. Ein bevorzugtes Ausführungsbeispiel weist zwei Manschettenhälften auf, wobei zwischen dem Rohr und den beiden Manschettenhälften jeweils ein Spalt mit einem Sensor und einer am Rohr anliegenden Paßscheibe angeordnet ist. Diese Anordnung ist symmetrisch zur Rohrachse.

An einer der Teilungsfugen zwischen den zwei Manschettenhälften ist zweckmäßig ein Scharnier angebracht, so daß die Manschette zur Vorbereitung der Messung aufgeklappt und dann um das Rohr herum geschlossen werden kann.

Als Sensor ist ein aus einem in ein elastisches Dielektrikum eingehüllten, leitenden Plättchen und den angrenzenden leitenden Flächen der Paßscheibe und/oder des Manschettenteils bestehender Kondensator vorgesehen.

Ein anderer Sensor besteht aus einer in einen elastischen Isolator eingegossenen Spule, deren Windungsabstände sich mit einer Stauchung des Isolators ändern. Ein ebenfalls induktiver Sensor besteht aus einer der leitenden Oberfläche der Paßscheibe stirnseitig gegenüberstehenden Spule.

Mehrere, in einer Manschette enthaltene induktive Sensoren können gegenseitig in einer elektrischen Brückenschaltung verschaltet sein. Zwei in einer Manschette angeordnete kapazitive Sensoren sind zweckmäßig parallelzuschalten.

Die Erfindung wird verdeutlicht durch sieben Figuren, die verschiedene Ausführungsbeispiele in schematischen Schnittzeichnungen darstellen.

Figur 1 zeigt eine Manschette, deren Meßspalt mit einem kapazitiven Sensor in einer Teilungsfuge liegt.

In Figur 2 ist der Meßspalt mit einem kapazitiven Sensor unmittelbar zwischen dem Rohr und einem Manschettenteil angeordnet.

Figur 3 zeigt eine symmetrische Anordnung von zwei Meßspalten mit zwei kapazitiven Sensoren zwischen Rohr und den Manschettenhälften.

Figur 4 zeigt eine Manschette mit einem Meßspalt, der einen induktiven Sensor enthält, in der Teilungsfuge der Manschettenhälften.

Figur 5 stellt eine Manschette mit einem zwischen Rohr und einer Manschettenhälfte angeordneten Meßspalt, der einen induktiven Sensor enthält, dar.

Die Figuren 6 und 7 entsprechen den Figuren 4 und 5 bis auf eine etwas andere Ausführung des induktiven Sensors.

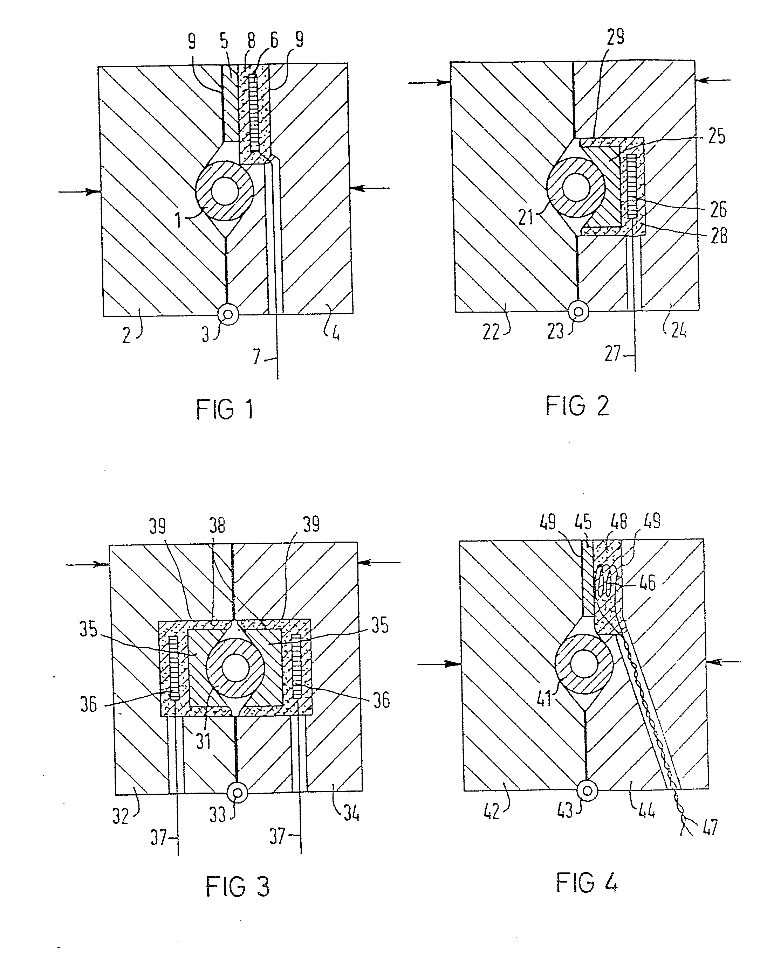

In der Schnittdarstellung der Figur 1 wird ein Fluid führendes Rohr 1 von den zwei Hälften 2 bzw. 4 einer Manschette umfaßt. Die beiden Manschettenhälften 2 und 4 sind in einem Scharnier 3 miteinander verbunden. Sie können um dieses Scharnier aufgeklappt werden und sind in diesem Zustand leicht um das Rohr 1 zu legen. Mit Hilfe einer nicht dargestellten Zwinge, die durch Pfeile angedeutete Kräfte auf die beiden Scharnierhälften 2 und 4 ausübt, kann die Manschette mit einer Vorspannung an das Rohr 1 gepreßt werden. Ein Spalt 9 in einer der Teilungsfugen der Manschette enthält den aus einem Leiterplättchen 6, das in ein elastisches Dielektrikum 8 eingebettet ist, bestehenden kapazitiven Sensor. Zum Ausgleich von Rohrtoleranzen dient eine Paßscheibe 5 mit zwei ebenen, parallelen Oberflächen. Über eine Bohrung in der Manschettenhälfte 4 kann das Leiterplättchen 6 an ein Kabel 7 angeschlossen werden.

In der Schnittdarstellung der Figur 2 wird ein Rohr 21 von zwei Manschettenhälften 22 und 24 umfaßt, die um ein Scharnier 23 klappbar sind. Von einer nicht dargestellten Zwinge oder dergleichen auf die Scharnierhälften ausgeübte Kräfte sind wieder mit Pfeilen bezeichnet. Ein Spalt 29, der in die Manschettenhälfte 24 eingelassen ist, enthält eine Paßscheibe 25 und ein von einem elastischen Dielektrikum 28 umgebenes Leiterplättchen 26. Die Paßscheibe 25 ist auf ihrer dem Rohr 21 zugewandten Seite zur besseren Anpassung an das Rohr ausgekehlt, die dem Leiterplättchen 26 zugekehrte Seite der Paßscheibe 25 ist eben. Der Sensor ist ein kapazitiver Sensor, dessen Kapazität zwischen dem Leiterplättchen 26 einerseits und der ihm zugewandten leitenden Oberfläche der Paßscheibe 25 und/oder der ihm zugewandten leitenden Oberfläche der Manschettenhälfte 24 veränderlich ist. Das Potential des Leiterplättchens 26 ist über ein Kabel 27 für den Anschluß an eine nicht dargestellte elektrische Schaltung herausgeführt.

In der Figur 3 ist eine symmetrische Anordnung von zwei Spalten 39 in zwei Manschettenhälften 32 und 34 dargestellt. Dabei legen sich zwei Paßscheiben 35 an das Rohr 31. Zwischen ebenen Oberflächen der Paßscheiben 35 und den Spaltwänden liegen Leiterplättchen 36. Der verbleibende Hohlraum der Spalten ist mit einem elastischen Dielektrikum 38 ausgefüllt. Zwei Kabel 37 bilden elektrische Zuleitungen zu den Leiterplättchen 36. Die beiden Manschettenhälften 32 und 34 sind an einem Scharnier 33 miteinander verbunden.

In der Figur 4 ist eine der Anordnung nach Figur 1 entsprechende Anordnung, jedoch mit einem induktiven Sensor, dargestellt. Ein Rohr 41 wird von zwei Manschettenhälften 42 und 44, die durch ein Scharnier 43 klappbar miteinander verbunden sind, umfaßt. Ein Spalt 49 in einer Teilungsfuge der beiden Manschettenhälften enthält eine Paßscheibe 45 und in einem elastischen Isolator 48 eingebettet eine Spule 46, die einen induktiven Sensor darstellt, dessen Induktivität durch die Stauchung des elastischen Isolators 48 in Richtung der Spulenachse verändert wird. Die Induktivitätsänderungen der Spule 46 können über ein Kabel 47 erfaßt werden.

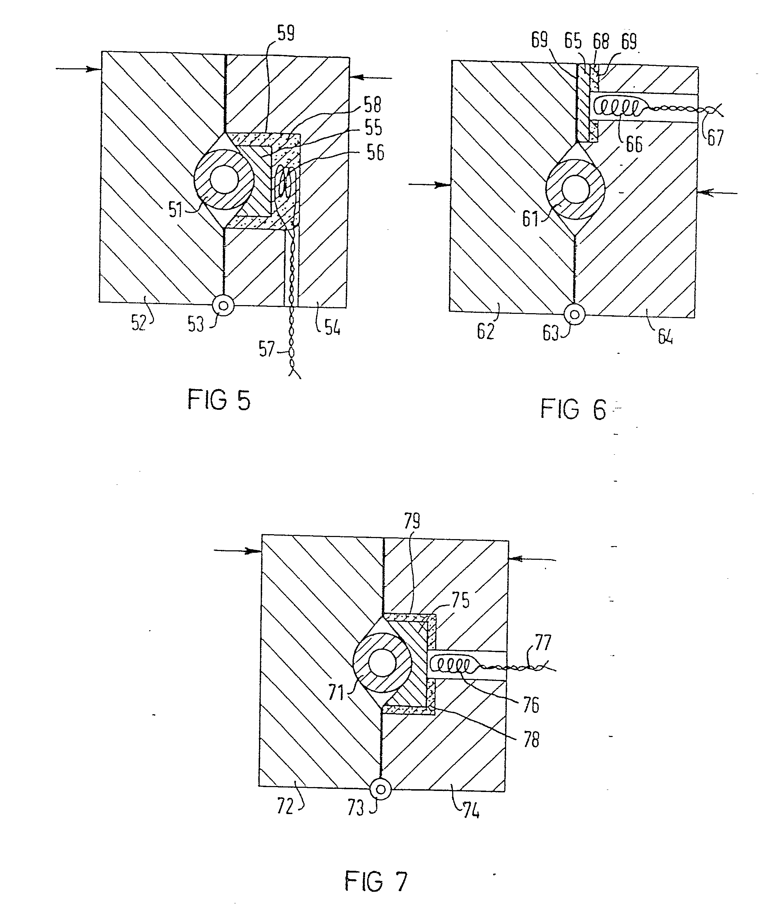

In der Figur 5 sind zwei über ein Scharnier 53 miteinander verbundene Manschettenhälften 52 und 54 zu erkennen, die ein Rohr 51 umfassen. Die Manschettenhälfte 54 enthält einen Spalt 59, in dem eine Paßscheibe 55 und eine in einen elastischen Isolator 58 eingebettete Spule 56 Platz finden. Anfang und Ende der Spule 56 sind über ein Kabel 57 nach außen geführt.

In Figur 6 ist eine andere Ausführung eines induktiven Abgriffs gezeigt, bei dem eine Spule 66 mit einer ihrer Stirnseiten einer Paßscheibe 65 gegenübersteht. Der Rest eines in einer Teilungsfuge zwischen zwei Manschettenhälften 62 und 64 liegenden Spaltes 65 ist von einem elastischen Isolator 68 ausgefüllt. Die Spule 66 selbst ist nicht von dem Isolator eingehüllt und kann durch eine Bohrung in der Manschettenhälfte 64 in eine geeignete Meßstellung gebracht werden. Die Manschettenhälften 62 und 64 sind über ein Scharnier 63 miteinander verbunden. In die Manschettenhälften eingearbeitete Auskehlungen für ein Rohr 61 müssen nicht dem äußeren Rohrumfang entsprechen. Dies ist auch aus der Figur zu erkennen.

In der Figur 7 ist ein dem Sensor 66 nach Figur 6 entsprechender Sensor 76 in einer Grundanordnung nach Figur 5 angebracht. Zwei Manschettenhälften 72 und 74 sind an einem Scharnier 73 miteinander klappbar verbunden, sie umfassen ein Rohr 71. Eine Paßscheibe 75 ist gegenüber dem Rohr ausgekehlt; gegenüber der Spule 76 weist sie eine ebene Oberfläche auf. Der Rest eines Spaltes 79 ist mit einem elastischen Isolator 78 ausgefüllt. Ein Kabel 77 führt die Enden der Spule 76 nach
außen.

In allen Ausführungsformen kann die Manschette auch aus
Kunststoff ausgeführt werden, wenn darauf geachtet wird,
daß beispielsweise bei den kapazitiven Sensoren eine als
kapazitiver Belag dienende Spaltwand metallisiert ist.

Patentansprüche

1. Geteilte Druckabgriff-Manschette, die ein sich unter dem Druck eines Fluids elastisch aufweitendes Rohr umfaßt und einen druckabhängig breitenveränderlichen, einen Sensor aufnehmenden Spalt enthält, d a d u r c h g e k e n n z e i c h n e t , daß zum Ausgleich verschiedener Rohrdurchmesser in den Spalt (9 bis 79) zusätzlich eine mindestens auf einer Seite ebene Paßscheibe (5 bis 75) eingelegt ist.

2. Geteilte Druckabgriff-Manschette nach Anspruch 1, d a d u r c h g e k e n n z e i c h n e t , daß der Spalt (9, 49, 69) in einer Teilungsfuge der Manschette liegt und die Paßscheibe (5, 45, 65) zwei ebene, parallele Oberflächen aufweist.

3. Geteilte Druckabgriff-Manschette nach Anspruch 1, d a d u r c h g e k e n n z e i c h n e t , daß der Spalt (29, 39, 59, 79) zwischen Rohr (21, 31, 51, 71) und einem der Manschettenteile liegt und die Paßscheibe (25, 35, 55, 75) eine gekehlte und eine ebene Oberfläche aufweist.

4. Geteilte Druckabgriff-Manschette nach Anspruch 3, d a d u r c h g e k e n n z e i c h n e t , daß zwischen Rohr und den Manschettenteilen jeweils ein Spalt mit einem Sensor und einer am Rohr anliegenden Paßscheibe angeordnet ist.

5. Geteilte Druckabgriff-Manschette nach Anspruch 4, d a d u r c h g e k e n n z e i c h n e t , daß zwischen Rohr (31) und zwei Manschettenhälften (32, 34) jeweils ein Spalt (39) mit einem Sensor (36) und einer am Rohr (31) anliegenden Paßscheibe (35) angeordnet ist.

6. Geteilte Druckabgriff-Manschette nach Anspruch 1 oder einem der vorausgehenden Ansprüche, d a d u r c h g e k e n n z e i c h n e t , daß an einer Teilungsfuge zwischen zwei Manschettenteilen ein Scharnier (3 bis 73) angeordnet ist.

7. Geteilte Druckabgriff-Manschette nach Anspruch 1 oder einem der vorausgehenden Ansprüche, d a d u r c h g e k e n n z e i c h n e t , daß der Sensor ein aus einem in ein elastisches Dielektrikum (8, 28, 38) eingehüllten Leiterplättchen (6, 26, 36) und den angrenzenden leitenden Flächen der Paßscheibe (5, 25, 35) und/oder des Manschettenteils (4, 24, 32, 34) bestehender Kondensator ist.

8. Geteilte Druckabgriff-Manschette nach Anspruch 1 oder einem der vorausgehenden Ansprüche 2 bis 6, d a - d u r c h g e k e n n z e i c h n e t , daß der Sensor eine in einem elastischen Isolator (48, 58) eingegossene, mit einer Stauchung des Isolators (48, 58) ihren Windungsabstand verkürzende Spule (46, 56) ist.

9. Geteilte Druckabgriff-Manschette nach Anspruch 1 oder einem der vorausgehenden Ansprüche 2 bis 6, d a - d u r c h g e k e n n z e i c h n e t , daß der Sensor eine einer leitenden Oberfläche der Paßscheibe (65, 75) stirnseitig gegenüberstehende Spule (67, 77) ist.

10. Geteilte Druckabgriff-Manschette nach Anspruch 1 oder einem der vorausgehenden Ansprüche, d a d u r c h g e k e n n z e i c h n e t , daß die induktiven Sensoren Teile einer elektrischen Brückenschaltung sind.

FIG 1

FIG 2

FIG 3

FIG 4

FIG 5

FIG 6

FIG 7

Europäisches Patentamt

**EUROPÄISCHER RECHERCHENBERICHT**

Nummer der Anmeldung

EP 80 10 1691

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 535 937 (B.B. WIGGINS et al.) <br><br> * Spalte 2, Zeilen 62-70; Figur 2 * | 1,3-5 |
| | DE - A - 2 440 493 (CKD PRAHA) <br><br> * Seiten 4 und 5; Figur 1 * | 1 |
| | FR - A - 2 101 393 (UMC ELECTRONICS CO.) <br><br> * Seite 4, Zeilen 6-21; Figur 2 * | 1 |
| | FR - A - 2 358 561 (SOURIAU ET CIE) <br><br> * Patentansprüche; Figuren * | 6 |
| | FR - A - 2 320 536 (DEMICHELIS J.) <br><br> * Patentansprüche; Figur * | 6 |
| | DE - A - 2 638 785 (N.A.J. EILERSEN) <br><br> * Seite 7; Figur 12 * | 6,7 |
| D | DE - A - 2 747 949 (H. LIST) <br><br> * Patentanspruch 1; Figuren * | 7-9 |

**KLASSIFIKATION DER ANMELDUNG (Int.Cl. ³)**

G 01 L 19/00
9/10
9/12
23/24

**RECHERCHIERTE SACHGEBIETE (Int. Cl. ³)**

G 01 L 7/00
7/02
9/00
9/10
9/12
19/00
23/12
23/24
F 02 M 65/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 10.07.1980 | VAN ASSCHE |

EPA form 1503.1 06.78